# EUROPÄISCHE PATENTSCHRIFT

(11) **EP 2 200 134 B1**
(45) Veröffentlichungstag und Bekanntmachung des Hinweises auf die Patenterteilung: **30.01.2013**
(21) Anmeldenummer: 08020911.7
(22) Anmeldetag: 02.12.2008
(51) Int. Cl.: H02B 1/052

(54) **Baugruppe mit Gehäuse für Profilschiene**
Component with casing for profile rail
Composant doté d'un boîtier pour rail de profilé

(43) Veröffentlichungstag der Anmeldung: 23.06.2010
(73) Patentinhaber: Siemens Aktiengesellschaft, 80333 München (DE)
(72) Erfinder: Fürholzer, Roland, 92224 Amberg (DE)

(56) Entgegenhaltungen:
- EP-A- 0 740 499
- DE-B3- 10 243 383

## Beschreibung

Die Erfindung betrifft eine Baugruppe mit Gehäuse, umfassend ein erstes Haltemittel und ein zweites Haltemittel zur Befestigung an einer Profilschiene, wobei das erste Haltemittel derart ausgestaltet ist, dass es mit einem ersten Klemmmittel der Profilschiene formschlüssig verbindbar ist, wobei das zweite Haltemittel ein Spannmittel und ein Verankerungsmittel aufweist.

Für den Aufbau von beispielsweise Elektronik-Systemen werden je nach Anwendung eine mehr oder weniger große Anzahl von Baugruppen, beispielsweise nebeneinander, an eine, beispielsweise in einem Schaltschrank befestigten, Profilschiene gehängt bzw. befestigt. Dabei wird üblicherweise eine obere Kante der Baugruppe zuerst eingehängt und durch eine Schwenkbewegung die untere Kante der Baugruppe mit der Profilschiene verrastet und somit wird diese Baugruppe in ihre endgültige Position gebracht. Eine derartige Baugruppe ist in der EP 0 740 499 A1 offenbart.

Bei dem Positionieren der Baugruppen werden die Baugruppen u.a. über einen Rückwandbus bzw. über Verbindungsklemmen miteinander kontaktiert. Damit sämtliche Kontaktierungen, auch unter beispielsweise industriellen Bedingungen, wie Vibrationen, Schock, Staub, Hitze, Kälte etc., gewährleistet sind, wird eine sichere Befestigungsmöglichkeit benötigt. Bei dem Einhaken einer Baugruppe an eine Profilschiene mittels eines Schnapphakens ist es von Nachteil, dass der Schnapphaken, um seine Funktionalität des Hinterrastens zu gewährleisten, ein Spiel zwischen einer Rastnase und der Profilschiene aufweisen muss. Ist dieses Spiel nicht vorhanden, funktioniert der Schnappmechanismus nicht. Dieses Spiel hat jedoch zufolge, dass bei einem richtig dimensionierten Schnapphaken im verrasteten Zustand keine ausreichende Anpresskraft zwischen der Baugruppe und der Profilschiene herrscht, welches für den Einsatz unter industriellen Bedingungen ungünstig ist.

Auch eine Lösung mit einem Haltearm wie sie in der DE 102 43 383 B3 offenbart wird weist diesen Nachteil auf.

Auch bei einer Lösung bei der anstelle des Schnapphakens eine Schraubverbindung eingesetzt wird, ist es von Nachteil, dass zur Betätigung der Schraube mehrere volle Umdrehungen benötigt werden und der Monteur für die Montage mehr Zeit benötigt.

Aus der EP 0 528 341 B1 ist eine Vorrichtung zur lösbaren Befestigung eines Gerätegehäuses an eine Profilschiene bekannt. Bei dieser Vorrichtung wird ein Arretierteil mit einem Klemmteil so gekoppelt, dass ein gegenseitiger Abstand beider Teile durch das Verschieben des Arretierteils in mindestens zwei Stellungen veränderbar ist, und dass in einer dieser Stellungen das Klemmteil durch das Arretierteil so blockiert ist, dass sich dieses nicht in die Öffnungsstellung zum Lösen des Gerätegehäuses von der Profilschiene verschieben lässt. Damit ist zwar eine relativ einfach aufgebaute Vorrichtung geschaffen, wobei mit dieser Vorrichtung eine leicht zu lösende Gehäusebefestigung erreicht wird, aber eine Anpresskraft der Baugruppe an die Profilschiene kann mit dieser Vorrichtung nicht erreicht werden.

Der Erfindung liegt daher die Aufgabe zugrunde, eine Vorrichtung mit den Merkmalen des Oberbegriffs des Anspruchs 1 zu schaffen, die eine erhöhte Anpresskraft gegenüber den aus dem Stand der Technik bekannten Vorrichtungen aufweist.

Die Aufgabe wird für die eingangs genannte Baugruppe mit dem Spannmittel und dem Verankerungsmittel dadurch gelöst, dass das Spannmittel drehbar um einen an dem Gehäuse angeordneten Drehpunkt angeordnet ist, wobei das Spannmittel mit dem Verankerungsmittel derart zusammenwirkt, dass durch eine Drehbewegung des Spannmittels das Verankerungsmittel mit einem zweiten Klemmmittel der Profilschiene verrastbar ist, wobei das Verankerungsmittel ein Führungsmittel aufweist, welches mit einem am Gehäuse angeordneten Führungspunkt in Eingriff steht, und das Führungsmittel als eine Kulissenführung mit einem kurvenförmigen Verlauf zum Steuern der Bewegung des Verankerungsmittels ausgestaltet ist. Die Baugruppe wird beispielsweise mit ihrem ersten Haltemittel, welches an einer Unterseite der Baugruppe angeordnet sein kann, in oder auf ein erstes Klemmmittel der Profilschiene gesteckt und durch eine Schwenkbewegung an die Profilschiene geführt, so dass sich ein zweites Haltemittel der Baugruppe mit einem zweiten Klemmmittel der Profilschiene verrastet, wobei das zweite Klemmmittel eine obere Kante der Profilschiene sein kann. Das zweite Haltemittel ist dabei als ein Mechanismus, umfassend ein Spannmittel und ein Verankerungsmittel aufgebaut, das Verankerungsmittel kann sich dabei an der Oberkante der Profilschiene einhaken und mittels des Spannmittels kann das Verankerungsmittel gespannt werden und die Baugruppe mit einer Kraft gegen die Profilschiene angepresst werden.

Dieses Führungsmittel ist als eine Art Schablone zu sehen, welche dem Verankerungsmittel eine Zwangsführung bei einer Bewegung des Spannmittels zur Befestigung der Baugruppe mittels des Verankerungsmittels vorgibt. Beim Einschwenken einer Baugruppe an eine Profilschiene ist das Verankerungsmittel vorzugsweise derart platziert, das es bei dem Einschwenkvorgang der Baugruppe an die Profilschiene nicht hinderlich ist. Dies bedingt das, dass Verankerungsmittel vorzugsweise in einer gegenüber der oberen Kante der Profilschiene erhöhten Position positioniert ist. Im eingeschwenkten Zustand der Baugruppe an die Profilschiene muss zur Befestigung des Verankerungsmittels an der Profilschiene das Verankerungsmittel eine Abwärtsbewegung erfahren. Diese Abwärtsbewegung wird vorzugsweise durch das Führungsmittel erreicht.

Dieser kurvenförmige Verlauf ist derart angepasst, dass zum Steuern der Bewegung des Verankerungsmittels eine optimale Bewegungsbahn erreicht wird.

Diese Kulissenführung oder kurz Kulisse weist dabei vorzugsweise einen Schlitz, einen Steg oder eine Nut auf, in/auf der/dem ein Kulissenstein beidseitig zwangsgeführt ist, um eine Bewegung der Kulisse in eine Bewegung des Kulissensteins umzusetzen bzw. umgekehrt. Eine Übertragungsfunktion der Kulissenführung wird dabei vorzugsweise durch den Verlauf des Schlitzes, Steges oder der Nut bestimmt und ist in weiten Grenzen frei wählbar.

In einer weiter optimierten Ausgestaltung bildet das Verankerungsmittel und das Spannmittel eine Verriegelungsvorrichtung mit einem Kniehebelgelenk. Das Spannmittel als drehbares Gelenkteil um den Drehpunkt, vorzugsweise mit einem Spannbügel ausgestaltet, sorgt, beispielsweise durch eine Betätigung mit einem Finger, für die notwendige Bewegung und die benötigte Kraft des Verankerungsmittels zum Anpressen der Baugruppe an die Profilschiene.

In einer möglichen Ausgestaltung ist das Spannmittel mit einer Lagerbuchse zur Aufnahme eines ersten Wellenstumpfes des Gehäuses ausgestaltet. Das Spannmittel als Teil des Kniehebelgelenkes ist vorzugsweise über eine in das Spannmittel eingearbeitete Lagerbuchse, in welche ein Wellenstumpf des Gehäuses hineinragt, zur Ausführung der Drehbewegung drehbar gelagert.

Dabei ist es weiterhin vorteilhaft, dass das Spannmittel einen Anschlag zur Begrenzung der Drehbewegung aufweist. Der Anschlag kann derart an dem Spannmittel angebracht sein, dass eine maximale Kraft, welche über das Verankerungsmittel auf die Profilschiene übertragen wird, nicht überschritten wird. Der Anschlag ist dabei beispielsweise als eine umgeknickte Blechkante des Spannmittels ausgestaltet, welche an dem Verankerungsmittel anschlägt und somit die Drehbewegung des Spannmittels hemmt.

Um ein Abrutschen des Verankerungsmittels von der oberen Kante der Profilschiene zu vermeiden, ist vorzugsweise das Verankerungsmittel mit einer bogenförmig ausgebildeten Spannkralle versehen. Auch denkbar ist das die bogenförmige Spannkralle integrativer Bestandteil des Verankerungsmittels und beispielsweise als ein Stanzblechteil gefertigt ist.

Weiterhin ist es vorteilhaft, wenn das Führungsmittel zum Ausführen einer aus einer Abwärtsbewegung und einer Vorwärtsbewegung überlagerten Bewegung des Verankerungsmittels von einer Anfangsposition in eine Verriegelungsposition ausgestaltet ist. Mit dieser Ausführung ist es vorzugsweise möglich, das bei einer Drehung des Spannmittels in Richtung der Profilschiene die Spannkralle zunächst im Wesentlichen an ihrer Spitze nach unten bewegt wird, damit sie an der Profilschiene im Eingriff ist und danach kann die Spannkralle vom Spannmittel straff gezogen werden und somit die nötige Anpresskraft zwischen Baugruppe und Profilschiene erzeugt werden.

Im letzten Teil der Bewegung bei dieser überlagerten Bewegung überwindet das Kniehebelgelenk einen Scheitelpunkt. Die Baugruppe ist nun sicher mit der Profilschiene vorhanden und kann sich nicht selbständig von der Profilschiene lösen.

Für die Prozessautomatisierung wird vorzugsweise eine Baugruppe für den Einsatz im industriellen Umfeld, insbesondere eine Automatisierungskomponente, mit einem Befestigungsmechanismus, welcher eine hohe Anpresskraft gewährleistet, nach dem zuvor genannten Ausführungen eingesetzt.

Bei der Montage der Baugruppe erweist es sich als besonders praktisch, dass die zur Verriegelung der Baugruppe ausübbare Drehbewegung des Spannmittels in Richtung der Einschwenkrichtung ausübbar ist. Verlaufen die Schwenkrichtung und die Drehrichtung des Spannbügels, also der Druck auf den Spannbügel in dieselbe Richtung, so kann die Baugruppe in einem Arbeitsgang eingeschwenkt und befestigt werden.

Ein Ausführungsbeispiel, sowie weitere Merkmale der Erfindung sind in der folgenden Zeichnung dargestellt. Es zeigen:
- FIG 1: eine Baugruppe in einer Einschwenkbewegung an einer Profilschiene in einer Seitenansicht und
- FIG 2: eine Baugruppe an einer Profilschiene in einer perspektivischen Ansicht.

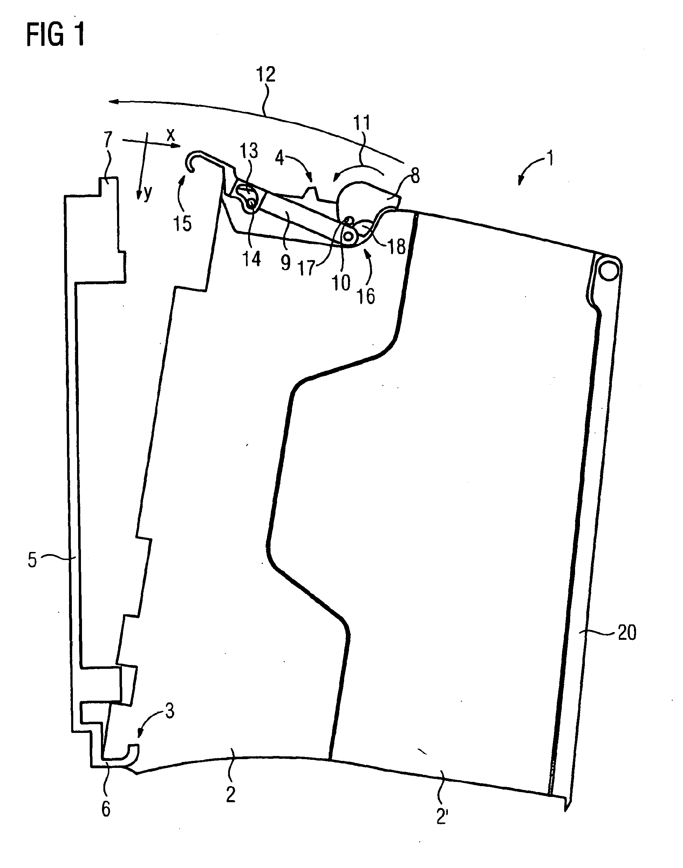

Gemäß FIG 1 ist eine Baugruppe 1 mit einem Gehäuse 2 in einer Einschwenkbewegung an eine Profilschiene 5 dargestellt. Die Baugruppe 1 steckt mit einer unteren Kante der Baugruppe 1 in einen ersten Klemmmittel 6 der Profilschiene 5. Das erste Klemmmittel 6 der Profilschiene 5 ist dabei als ein bogenförmiger Vorsprung ausgestaltet. In diesen bogenförmigen Vorsprung ist ein erstes Haltemittel 3 der Baugruppe 1 einsteckbar. Das erste Haltemittel 3 ist als eine Ein- und Ausformung des äußeren Gehäuses 2 der Baugruppe 1 ausgestaltet. Die aus dieser Position auszuführende Einschwenkbewegung 12 ist als ein Richtungspfeil angedeutet. Mit der Einschwenkbewegung 12 wird die Baugruppe 1 an die Profilschiene 5 angedrückt. Dies geschieht üblicher Weise durch Andrücken mit der Hand oder mit einem Finger des zuständigen Monteurs.

Um die Baugruppe mit einem zweiten Haltemittel 4 an der Profilschiene 5 zu befestigen, weist das zweite Haltemittel 4 ein Spannmittel 8 und ein Verankerungsmittel 9 auf, wobei das Spannmittel 8 drehbar um einen an dem Gehäuse 2 angeordneten Drehpunkt 10 angeordnet ist. Der Drehpunkt 10 ist dabei als ein erster Wellenstumpf ausgestaltet. Der erste Wellenstumpf ist als eine Erhebung in der Mantelfläche des Gehäuses 2 realisiert. Das Spannmittel 8 wirkt mit dem Verankerungsmittel 9 derart zusammen, dass durch eine Drehbewegung 11 des Spannmittels 8, das Verankerungsmittel 9 mit einem zweiten Klemmmittel 7 der Profilschiene 5 verrastbar ist. Das zweite Klemmmittel 7 der Profilschiene ist als eine obere Kante der Profilschiene ausgestaltet.

Das Verankerungsmittel 9 weist ein Führungsmittel 13 auf, welches mit einem an dem Gehäuse 2 angeordnetem Führungspunkt 14 in Eingriff steht. Der Führungspunkt 14 ist dabei ähnlich dem Drehpunkt 10 als ein zweiter Wellenstumpf am Gehäuse 2 angeordnet. Das Führungsmittel 13 weist eine Kulissenführung mit einem kurvenförmigen Verlauf zum Steuern der Bewegung x,y des Verankerungsmittels 9 auf.

Damit sich das Haltemittel 4 fest hinter dem zweiten Klemmmittel 7 einhaken kann, ist das Verankerungsmittel 9 an seinem Ende mit einer bogenförmig ausgebildeten Spannkralle 15 ausgestaltet. Liegt die Spannkralle 15 in einer Position, bei welcher die Baugruppe an die Profilschiene angedrückt ist, hinter dem zweiten Klemmmittel 7, so wird durch die durch das Verankerungsmittel 9 und das Spannmittel 8 gebildete Verriegelungsvorrichtung, welche als ein Kniehebelgelenk 16 ausgestaltet ist, durch die Drehbewegung 11 des Spannmittels 8 in seiner Funktion als Kniehebelgelenk 16, die nötige Spannkraft zum Andrücken der Baugruppe 1 an die Profilschiene 5 erzeugt. Damit das Spannmittel 8 nicht über eine maximale Anpresskraft hinaus gedreht werden kann, weist das Spannmittel 8 einen Anschlag 18 auf. Das Spannmittel 8 ist als ein Blechstanzteil anzusehen, bei dem der Anschlag 18 durch eine umgebogene Lasche dieses Blechstanzteils gebildet wird und in einer Anschlagposition an das Verankerungsmittel 9 anschlägt. Durch das Führungsmittel 13 mit seinem kurvenförmigen Kulissenführungsverlauf kann mittels der Drehbewegung 11 des Spannmittels 8 das Verankerungsmittel 9 einen überlagerten Bewegungsablauf absolvieren. Dieser Bewegungsablauf besteht aus einer Vorwärtsbewegung in X-Richtung x und einer Abwärtsbewegung in Y-Richtung y.

Die Baugruppe umfasst neben ihrem Gehäuse 2 einen weiteren Gehäuseteil 2', wobei der weitere Gehäuseteil 2' eine Klappe 20 aufweist. Da heutige Baugruppen üblicherweise auch über Kontakte bzw. Kontaktfelder, Kontaktstifte, welche an der Rückseite der Baugruppe angeordnet sind, mit Steckern, welche in der Profilschiene angeordnet sind, verbunden werden, kann mittels des zweiten Haltemittels 4 also dem Verriegelungsmechanismus aus Verankerungsmittel 9 und Spannmittel 8, welche zusammen ein Kniegelenk bilden, die nötige Anpresskraft für eine sichere Kontaktierung der Baugruppe mit Steckern in der Profilschiene gewährleistet werden.

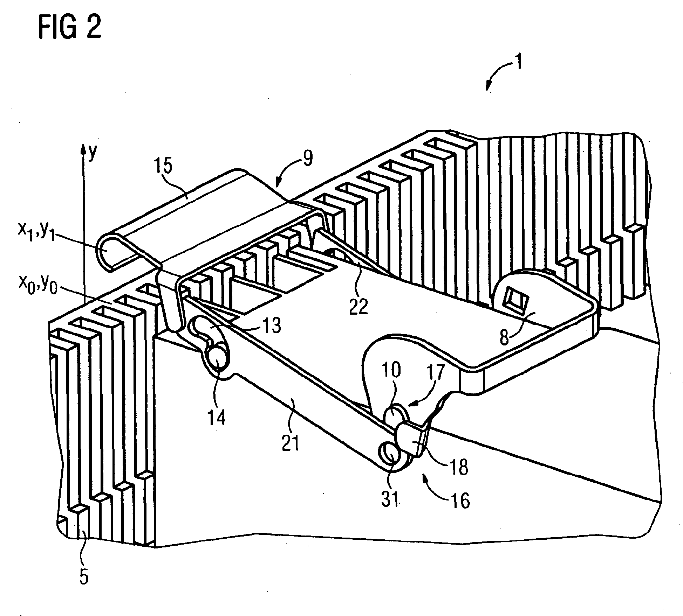

Gemäß FIG 2 ist die aus FIG 1 bekannte Baugruppe 1 in einer perspektivischen Ausschnittsdarstellung abgebildet. Die Baugruppe 1 ist bereits in die Profilschiene 5 eingeschwenkt, die Spannkralle 15 befindet sich noch in einer freien Position y₁ zur Profilschiene 5. Ein Monteur müsste nun vorzugsweise mittels Fingerdruck auf das Spannmittel 8 drücken um die Baugruppe 1 zu befestigen, das Spannmittel 8 weist dabei einen Spannbügel auf, auf den der Druck durch den Finger gut übertragbar ist und das Spannmittel 8 in eine Drehbewegung in Richtung der Profilschiene 5 versetzt. Bei dieser Drehbewegung dreht sich das Spannmittel 8 um den Drehpunkt 10, dabei hat das Spannmittel 8 eine Lagerbuchse 17 zur sicheren Führung um den Drehpunkt 10. Das Spannmittel 8 weist einen ersten Zapfen 31 auf, dieser erste Zapfen 31 ist ebenfalls als ein Wellenstumpf ausgebildet und steckt in einer Öffnung des Verankerungsmittels 9 um das Kniehebelgelenk zu bilden. Das zweite Haltemittel 4 ist neben seiner Spannkralle 15 mit einem ersten Bügel 21 und einem zweiten Bügel 22 ausgestaltet. Der erste und der zweite Bügel 21,22 sind mit der Spannkralle 15 verbunden und bilden eine U-förmige Vorrichtung, diese U-förmige Vorrichtung ist über die Führungsmittel 13 an der Baugruppe 1 führbar. Die Führungsmittel 13 sind jeweils in dem ersten Bügel 21 und dem zweiten Bügel 22 als eine kurvenförmige Kulissenführung eingearbeitet. Durch den Führungspunkt 14, welcher als Wellenstumpf im Gehäuse 2 ausgestaltet ist, kann das Verankerungsmittel 9 durch die in den Bügeln 21,22 eingearbeiteten schablonenförmigen Verläufe in eine vorbestimmte x- und y-Richtung geführt werden.

Ein Druck auf den Spannbügel des Spannmittels 8 setzt eine Drehbewegung 11 in Gang, wobei der Bügel 21 und 22 über den Zapfen 31 in eine Vorwärtsbewegung in x-Richtung versetzt wird. Gleichzeitig wird mittels der Kulissenführung die Spannkralle 15 in eine Abwärtsbewegung y abgesenkt. Die Spannkralle 15 bewegt sich von einer Anfangsposition y₁,x₁ in eine Verriegelungsposition y₀,x₀. In dieser Verriegelungsposition x₀,y₀ ist das Spannmittel 8 vollständig nach vorne, in Richtung der Profilschiene 5, durchgedrückt und der Anschlag 18 liegt an einer oberen Kante des ersten Bügels 21 an. Da im letzten Teil der Bewegung des durch das Spannmittel 8 und das Verankerungsmittel 9 gebildeten Kniehebelgelenkes 16 ein Scheitelpunkt überwunden wird, kann die Befestigungsvorrichtung über seine Spannkralle 15 nun den maximalen Druck auf die Profilschiene 5 ausüben bzw. die Baugruppe 1 an die Profilschiene 5 anpressen. In dieser Verriegelungsposition ist die Baugruppe 1 sicher mit der Profilschiene 5 verbunden und kann sich selbständig nicht mehr von der Profilschiene 5 lösen.

Um die Baugruppe 1 wieder von der Profilschiene 5 zu lösen, muss z.B. mit Hilfe eines Schraubendrehers der Spannbügel des Spannmittels 8 leicht angehoben werden, so dass das Kniehebelgelenk 16 seinen Scheitelpunkt in der entgegengesetzten Richtung überwinden kann. Danach springt die Verriegelung aufgrund einer Vorspannung von alleine in seine Ausgangsstellung zurück.

Durch die Kulissenführung und die dadurch resultierende Führung der Spannkralle bleibt diese in ihrer Bewegung definiert. Sie kann nicht wegkippen und muss deshalb vor dem Befestigen der Baugruppe auch nicht gesondert ausgerichtet werden. Dies ist bei der Montage ein großer Vorteil. Die zur Verriegelung der Baugruppe benötigte Druckbewegung am Spannbügel erfolgt in der gleichen Richtung wie das Einschwenken der Baugruppe. Eine Kombination aus Druck- und Ziehbewegung ist nicht notwendig. Bei einer Zugbeanspruchung auf die Baugruppe steigt die Spannkraft der Spannkralle stark an, so dass das System selbständig seine ursprüngliche Lage wieder einnimmt. Weiterhin ist es von Vorteil, dass geringere Anforderungen an die Maßgenauigkeit von Baugruppengehäusen und Eingriffsmaul gestellt werden können, da eventuelle Dickenunterschiede durch eine Elastizität der Spannkralle ausgeglichen werden können.

## Patentansprüche

1. Baugruppe (1) mit Gehäuse (2), umfassend ein erstes Haltemittel (3) und ein zweites Haltemittel (4) zur Befestigung an einer Profilschiene (5), wobei das erste Haltemittel (3) derart ausgestaltet ist, dass es mit einem ersten Klemmmittel (6) der Profilschiene (5) formschlüssig verbindbar ist, wobei das zweite Haltemittel (4) ein Spannmittel (8) und ein Verankerungsmittel (9) aufweist, wobei das Spannmittel (8) drehbar um einen an dem Gehäuse (2) angeordneten Drehpunkt (10) angeordnet ist, wobei das Spannmittel (8) mit dem Verankerungsmittel (9) derart zusammenwirkt, das durch eine Drehbewegung (11) des Spannmittels (8) das Verankerungsmittel (9) mit einem zweiten Klemmmittel (7) der Profilschiene (5) verrastbar ist,
**dadurch gekennzeichnet, dass** das Verankerungsmittel (9) ein Führungsmittel (13) aufweist, welches mit einem an dem Gehäuse (2) angeordnetem Führungspunkt (14) in Eingriff steht, wobei das Führungsmittel (13) als eine Kulissenführung mit einem kurvenförmigen Verlauf zum Steuern der Bewegung (x,y) des Verankerungsmittels (9), ausgestaltet ist.

2. Baugruppe (1) nach Anspruch 1, wobei das Verankerungsmittel (9) und das Spannmittel (8) eine Verriegelungsvorrichtung mit einem Kniehebelgelenk (16) bilden.

3. Baugruppe (1) nach Anspruch 1 oder 2, wobei das Spannmittel (8) mit einer Lagerbuchse (17) zur Aufnahme eines ersten Wellenstumpfes des Gehäuses (2) ausgestaltet ist.

4. Baugruppe (1) nach einem der Ansprüche 1 bis 3, wobei das Spannmittel (8) einen Anschlag (18) zur Begrenzung der Drehbewegung (11) aufweist.

5. Baugruppe (1) nach einem der Ansprüche 1 bis 4, wobei das Verankerungsmittel (9) eine bogenförmig ausgebildete Spannkralle (15) aufweist.

6. Baugruppe (1) nach einem der Ansprüche 1 bis 5, wobei das Führungsmittel (13) zum Ausführen einer aus einer Abwärtsbewegung (y) und einer Vorwärtsbewegung (x) übergelagerten Bewegung des Verankerungsmittels (9) von einer Anfangsposition in eine Verriegelungsposition ausgestaltet ist.

7. Baugruppe (1) nach einem der Ansprüche 1 bis 6, für den Einsatz im industriellen Umfeld, insbesondere als eine Automatisierungskomponente, mit einem Befestigungsmechanismus, welcher eine hohe Anpresskraft der Baugruppe (1) gegen die Profilschiene (5) gewährleistet.

8. Baugruppe (1) nach einem der Ansprüche 1 bis 7, wobei die zur Verriegelung der Baugruppe (1) ausübbare Drehbewegung (11) des Spannmittels (8) in Richtung der Einschwenkrichtung (12) ausübbar ist.

## Claims

1. Module (1) with housing (2), comprising a first retaining means (3) and a second retaining means (4) for fixing to a mounting rail (5), the first retaining means (3) being designed such that it can be connected in a form-fit manner to a first clamping means (6) of the mounting rail (5), the second retaining means (4) having a tensioning means (8) and an anchoring means (9), the tensioning means (8) being rotatably disposed about a pivot point (10) disposed on the housing (2), the tensioning means (8) interacting with the anchoring means (9) such that by rotation (11) of the tensioning means (8) the anchoring means (9) can be latched to a second clamping means (7) of the mounting rail (5), **characterised in that** the anchoring means (9) has a guiding means (13) which is in engagement with a guiding point (14) disposed on the housing (2), said guiding means (13) being implemented as a link guide with a curved run for controlling the movement (x,y) of the anchoring means (9).

2. Module (1) according to claim 1, the anchoring means (9) and the tensioning means (8) forming an interlock device with a toggle joint (16).

3. Module (1) according to claim 1 or 2, the tensioning means (8) being implemented with a bearing bush (17) for accommodating a first shaft stub of the housing (2).

4. Module (1) according to one of claims 1 to 3, the tensioning means (8) having a stop (18) for limiting the rotation (11).

5. Module (1) according to one of claims 1 to 4, the anchoring means (9) having an arcuate tensioning claw (15).

6. Module (1) according to one of claims 1 to 5, the guiding means (13) being designed to impart a superimposed movement of the anchoring means (9) from an initial position to an interlock position, the movement comprising a downward movement (y) and a forward movement (x).

7. Module (1) according to one of claims 1 to 6, for use in an industrial environment, in particular as an automation component, with a fixing mechanism which ensures a high contact pressure of the module (11) against the mounting rail (5).

8. Module (1) according to one of claims 1 to 7, it being possible for the rotation (11) of the tensioning means (8) that can be imparted in order to interlock the module (1) to be imparted in the direction of the inward swivelling movement (12).

## Revendications

1. Composant ( 1 ) ayant un boîtier ( 2 ) comprenant un premier moyen ( 3 ) de maintien et un deuxième moyen (4) de maintien pour la fixation à un rail ( 5 ) profilé, le premier moyen ( 3 ) de maintien étant conformé de manière à pouvoir être relié à complémentarité de forme à un premier moyen ( 6 ) de serrage du rail ( 5 ) profilé, le deuxième moyen ( 4 ) de maintien ayant un moyen ( 8 ) de serrage et un moyen ( 9 ) d'ancrage, le moyen (8) de serrage étant monté tournant autour d'un point ( 10 ) de rotation disposé sur le boîtier ( 2 ), le moyen (8) de serrage coopérant avec le moyen ( 9 ) d'ancrage de manière à ce que, par un mouvement ( 11 ) de rotation du moyen (8) de serrage, le moyen (9) d'ancrage puisse s'encliqueter avec un deuxième moyen ( 7 ) de blocage du rail ( 5 ) profilé,
**caractérisé en ce que** le moyen ( 9 ) d'ancrage comporte un moyen ( 13 ) de guidage, qui est en prise avec un point ( 14 ) de guidage disposé sur le boîtier ( 2 ), le moyen ( 13 ) de guidage étant conformé en guidage à coulisse ayant un trajet curviligne pour la commande du mouvement ( x, y ) du moyen ( 9 ) d'ancrage.

2. Composant ( 1 ) suivant la revendication 1, dans lequel le moyen ( 9 ) d'ancrage et le moyen ( 8 ) de serrage forment un dispositif de verrouillage ayant une articulation ( 16 ) à genouillère.

3. Composant (1) suivant la revendication 1 ou 2, dans lequel le moyen (8) de serrage est conformé en ayant un coussinet ( 17 ) de palier pour la réception d'un premier bout d'arbre du boîtier ( 2 ).

4. Composant ( 1 ) suivant l'une des revendications 1 à 3, dans lequel le moyen ( 8 ) de serrage a une butée ( 18 ) pour la limitation du mouvement ( 11 ) de rotation.

5. Composant ( 1 ) suivant l'une des revendications 1 à 4, dans lequel le moyen ( 9 ) d'ancrage a un crampon ( 15 ) de serrage constitué en forme d'arc.

6. Composant ( 1 ) suivant l'une des revendications 1 à 5, dans lequel le moyen ( 13 ) de guidage est conformé pour la réalisation d'un mouvement du moyen (9) d'ancrage d'une position initiale à une position de verrouillage, le mouvement étant constitué de la superposition d'un mouvement ( y ) vers le bas et d'un mouvement ( x ) vers l'avant.

7. Composant ( 1 ) suivant l'une des revendications 1 à 6, à utiliser dans le domaine industriel, notamment comme composant d'automatisation, ayant un mécanisme de fixation, qui assure une grande force d'application en pression du composant ( 1 ) sur le rail ( 5 ) profilé.

8. Composant ( 1 ) suivant l'une des revendications 1 à 7, dans lequel le mouvement ( 11 ) de rotation du moyen ( 8 ) de serrage, qui peut être appliqué pour le verrouillage du composant ( 1 ), peut être appliqué dans la direction du pivotement ( 12 ) rentrant.
